# EUROPEAN PATENT SPECIFICATION

(11) **EP 3 128 886 B1**
(45) Date of publication and mention of the grant of the patent: **12.06.2019**
(21) Application number: 15719928.2
(22) Date of filing: 09.04.2015
(51) Int. Cl.: A47K 5/12, H02J 7/00

(54) **CONTROL FOR PRODUCT DISPENSER ENERGY STORAGE DEVICE**
STEUERUNG FÜR PRODUKTSPENDERENERGIESPEICHERUNGSVORRICHTUNG
COMMANDE D'UN DISPOSITIF DE STOCKAGE D'ÉNERGIE D'UN DISTRIBUTEUR DE PRODUIT

(30) Priority: 10.04.2014 US 201461977962 P
(43) Date of publication of application: 15.02.2017
(60) Divisional application: 19171796.6
(73) Proprietor: GOJO Industries, Inc., Akron, OH 44311 (US)
(72) Inventor: BULLOCK, Mark A., Wooster, Ohio 44691 (US); LIGHTNER, Bradley L., North Canton, Ohio 44720 (US); ZOSIMADIS, Panagiotis, Toronto, Ontario M9A1W4 (CA)
(74) Representative: Tetzner, Michael
(86) International application number: PCT/US2015/025157
(87) International publication number: WO 2015/157541

(56) References cited:
- WO-A1-2014/130236
- US-A- 4 722 372
- US-A1- 2008 185 396
- US-A1- 2014 054 322

## Description

### Related Applications

This patent claims priority to U.S. provisional patent application serial number 61/977,962, titled DISCHARGE RATE CONTROL FOR PRODUCT DISPENSER ENERGY STORAGE DEVICE, filed on April 10, 2014, and to U.S. non-provisional patent application serial number 14/682,664, titled CONTROL FOR PRODUCT DISPENSER ENERGY STORAGE DEVICE, filed April 9, 2015.

### Field of the Invention

The current invention relates generally to fluid product dispensers and in particular to refill reservoirs used in touch-free dispensers. More specifically, the current invention relates to refill reservoirs that include a source of energy that powers the fluid dispenser and methods of discharging that energy.

### Background of the Invention

Document US 2014/0054322 A1 discloses a product dispenser and a method of operating a product dispenser comprising a readily replaceable product reservoir with a battery, an electrically powered motor coupled to a pump, an intermediate energy storage device to provide operating power and a controller with an activation circuit. It is commonplace for publicly accessible facilities to provide soap dispensers in washrooms and other areas. Some systems are designed to receive disposable refill units produced in a sanitary environment. When empty of product, the whole reservoir is replaced along with the accompanying nozzle and pump. In this way, every part wetted by soap is disposed of when the dispenser is serviced. This greatly reduces and/or eliminates the germination of bio-films and contributes to the cleanliness of the facility.

In many instances, soap dispensers are automated to provide hands-free operation. These types of dispensers eliminate direct contact by the user, thereby reducing the possibility of germ transmission. Sensors are typically installed at a location near the nozzle where fluid product is discharged. When a user positions his or her hands near the sensor, the fluid dispenser automatically dispenses a measured amount of fluid product. A motor drives the pump which is fluidly connected to the reservoir. Naturally, power is needed to drive the motor which in some instances is supplied by a direct connection to the facilities main power. However, it is significantly easier to install a dispenser that has a self-contained source of energy.

For dispensers using an onboard power supply, electrical energy is often supplied in the form of batteries installed into the dispenser housing. However, one problem with dispensers of this type relates to the maintenance and replacement of the batteries. It is difficult or impossible to tell how much power is remaining in the batteries of a dispenser, or how spurts in usage will drain the remaining power in the batteries. To prevent dispenser downtime, service personnel must repeatedly check the batteries or replace the batteries before they are fully discharged, neither of which is cost-effective.

To alleviate this problem, it is possible to incorporate additional batteries into the refill unit. In this way a fresh supply of batteries is provided every time the dispenser reservoir is replaced. Moreover, the size and power output capacity of batteries in the dispenser can be scaled down and sized to accommodate the duty cycle of a single dispenser refill. The refill unit batteries can be provided in the form of "coin cells", also known as watch batteries, which are small and relatively inexpensive. However, coin cells are incapable of rapidly discharging energy. If power is drawn too quickly from a coin cell, the useful life of the battery can be greatly reduced.

To maximize the useful life of a coin cell battery, some dispensers incorporate an energy storage device, like for example a capacitor, to provide power to the dispenser motor. The capacitor is capable of supplying quick bursts of energy to the motor. After one or more dispensing cycles, the capacitor may be slowly recharged by the coin cell. However, capacitors have limited storage capacity and drain quickly with repeated use. In busy environments, the capacitor may be incapable in keeping up with dispensing activity. Accordingly, the controller must then draw power from the onboard batteries. In environments with less traffic, energy stored in the capacitors may dissipate over time. Even though the capacitor may be recharged from the onboard batteries, energy is being used but fluid product is not being dispensed. In this instance, the batteries may be depleted long before the reservoir is empty of product.

What is needed is a way of dynamically drawing energy from the onboard power supply that corresponds to the frequency of usage of the fluid product dispenser. The embodiments of the subject invention obviate the aforementioned problems.

### Summary of the Invention

The invention is defined by a product dispenser comprising at least the features of claim 1 and/or by a method of operating a product dispenser comprising at least the features of claim 9. In one embodiment of the subject invention, a dispensing system includes a housing designed to support a replaceable refill reservoir. The reservoir can include a pump and dispensing nozzle, which are assembled as a complete unit. A motor installed in the dispensing system actuates the reservoir pump. One or more batteries, incorporated into the refill reservoir, supply power to drive the motor. A capacitor is included with control circuitry that draws power from the batteries at a controlled rate. The rate by which the controller draws power from the batteries changes based on how rapidly the dispensing system is activated.

In another embodiment of the subject invention, the rate at which the controller draws power from the batteries changes based on how much fluid product is remaining in the refill reservoir.

In yet another embodiment of the subject invention, at least a first battery is incorporated into the refill reservoir and at least a second battery is incorporated into the housing of the dispensing system.

In one embodiment, a product dispenser includes a dispenser housing, a readily replaceable product reservoir for storing product which may be a hand care product, a battery integrated into the readily replaceable product reservoir, a pump having an inlet fluidly connected to the readily replaceable product reservoir where the pump includes an outlet for dispensing the product, an electrically powered, low-voltage motor coupled to actuate the pump, an intermediate energy storage device or supercapacitor electrically communicated to provide operating power to the motor where the intermediate energy storage device is configured to store a predetermined level of energy or a predetermined upper threshold level of energy that is sufficient to activate the motor through multiple activation cycles, and a controller communicated to activate the motor in response to a dispense event initiated by a user where the controller is communicated to the battery and to the intermediate energy storage device, and wherein the controller initiates discharging energy from the battery in response to the motor being activated for recharging the intermediate energy storage device to the predetermined level of energy, and wherein the controller is operable to selectively initiate discharging energy from the battery at one of a plurality of substantially different discharge rates, and wherein when the motor is activated the controller changes the discharge rate of discharging energy from the battery if the intermediate energy storage device has not been substantially recharged to the predetermined level of energy.

In one aspect of the subject invention, in response to activating the motor the controller initiates discharging energy from the battery at a first discharge rate to recharge the intermediate energy storage device within a first time interval, and in response to activating the motor again within the first time interval the controller increases the first discharge rate to a greater second discharge rate.

In another aspect of the subject invention, an energy source is mounted to the dispenser housing and is selectively communicated to the intermediate energy storage device, and the controller is operable to selectively initiate discharging energy from one or both of the batteries integrated into the readily replaceable product reservoir and the energy source operatively mounted to the dispenser housing for recharging the intermediate energy storage device.

In yet another aspect of the subject invention, when the energy level in the intermediate energy storage device falls below a lower threshold energy level or a critically low energy level, the controller initiates discharging energy from the energy source operatively mounted to the dispenser housing to recharge the intermediate energy storage device.

In still another aspect of the subject invention, when the energy level in the intermediate energy storage device falls below the lower threshold energy level or the critically low energy level, the controller deactivates the flow of energy from the battery integrated into the readily replaceable product reservoir.

In even another aspect of the subject invention, when the energy level in the intermediate energy storage device falls below the lower threshold energy level or the critically low energy level, the controller initiates the flow of energy from the battery integrated into the readily replaceable product reservoir and from the energy source operatively mounted to the dispenser housing to recharge the intermediate energy storage device.

In another embodiment of the subject invention, a method of operating a product dispenser includes the steps of: providing a product dispenser having a dispenser housing, a product reservoir for storing an associated product, a pump having an inlet fluidly connected to the product reservoir, the pump having an outlet for dispensing the associated product, a motor operatively coupled to actuate the pump, an intermediate energy storage device operatively communicated to provide operating power to the motor, a low power-density battery for recharging the intermediate energy storage device, a controller having a charging circuit operatively connected to the low power-density battery and the intermediate energy storage device for recharging the intermediate energy storage device, wherein the controller includes an activation circuit operatively connected to activate the motor, wherein the motor is operated in a finite activation cycle; activating the motor to dispense a predetermined amount of the associated product; discharging energy from the low power-density battery at a discharge rate to recharge the intermediate energy storage device within a first time interval; re-activating the motor within the first time interval; and increasing the discharge rate of energy being discharged from the battery to recharge the intermediate energy storage device in response to re-activating the motor within the first time interval.

In one aspect of the embodiments of the subject invention, a method of operating a product dispenser includes providing a product dispenser having a sensor configured to detect the motion of an associated user, wherein the sensor has an output operatively connected to the activation circuit of the controller; and automatically activating the motor to dispense a predetermined amount of associated product in response to detecting the motion of an associated user.

In another aspect of the embodiment of the subject invention, a method of operating a product dispenser includes providing a controller having a monitoring circuit communicated to the intermediate energy storage device for monitoring the level of energy stored in the intermediate energy storage device; and monitoring the level of energy stored in the intermediate energy storage device.

In yet another aspect of the embodiments of the subject invention, a method of operating a product dispenser includes defining a critically low threshold energy level of energy stored in the intermediate energy storage device, providing a product dispenser having an alternate energy source operatively mounted to the dispenser housing, and providing a controller that selectively recharges the intermediate energy storage device from one or both of the low power-density batteries and the alternate energy source in response to the level of energy in the intermediate energy storage device falling below the critically low threshold energy level.

In still another aspect of the subject invention, a method of operating a product dispenser includes progressively increasing the rate of energy being discharged from the low power-density battery in response to repeatedly re-activating the motor within the first time interval.

In another embodiment of the subject invention, a method of operating a product dispenser includes the steps of: providing a product dispenser having a dispenser housing, a readily replaceable product reservoir for storing associated product, a pump having an inlet fluidly connected to the product reservoir, the pump having outlet for dispensing associated product, a low-voltage motor operatively coupled to actuate the pump, an intermediate energy storage device operatively communicated to provide operating power to the motor, wherein the intermediate energy storage device is configured to store a sufficient amount of energy to activate the motor multiple times, a low power-density battery for recharging the intermediate energy storage device wherein the low power-density battery is integrated into the readily replaceable product reservoir, a controller having a charging circuit operatively connected to the low power-density battery and the intermediate energy storage device, wherein the controller includes an activation circuit operatively connected to activate the motor, and wherein the controller includes a counter circuit configured to count the number of times the activation circuit activates the motor; incrementing the counter circuit in response to activating the motor; recharging the intermediate energy storage device at a first recharge rate in response to activating the motor when the count in the counter circuit is below a predetermine counter value; and recharging the intermediate energy storage device at a substantially different second recharge rate in response to activating the motor when the count in the counter circuit has exceeded the predetermine counter value.

In one aspect of the embodiments of the subject invention, the method of operating a product dispenser includes recharging the intermediate energy storage device at a greater second recharge rate in response to activating the motor when the count in the counter circuit has exceeded the predetermine counter value.

In another aspect of an unclaimed embodiment, the method of operating a product dispenser includes: providing a controller having a timer circuit; and recharging the intermediate energy storage device within a predetermined time interval and at a substantially different second recharge rate in response to activating the motor when the count in the counter circuit has exceeded the predetermine counter value.

In yet another aspect of the embodiments of the subject invention, the method of operating a product dispenser includes engaging the controller to substantially empty the low power-density battery of energy when the counter has exceeded a second predetermine counter value of the number of times the activation circuit activates the motor.

In still another aspect of the embodiments of the subject invention, the method of operating a product dispenser includes resetting the count in the counter circuit when the readily replaceable product reservoir has been replaced.

### Brief Description of the Drawings

Fig. 1 depicts a perspective view of the product dispensing system, according to the embodiments of the subject invention.
Fig. 1a depicts a partial cut-away side view of the product dispensing system, according to the embodiments of the subject invention.
Fig. 2 is a perspective view of a product reservoir for use with the dispensing system, according to the embodiments of the subject invention.
Fig. 3 is a exploded view of a product reservoir, according to the embodiments of the subject invention.
Fig. 4 is a side view of a product reservoir, controller and energy storage device for a dispensing system, according to the embodiments of the subject invention.
Fig. 5 is a schematic representation of the product dispensing system, according to the embodiments of the subject invention.
Fig. 6 is a graph depicting changes to the level of energy stored in the intermediate energy storage device over time, according to the embodiments of the subject invention.
Fig. 7 is a graph depicting changes to the level of energy stored in the intermediate energy storage device over time, according to the embodiments of the subject invention.
Fig. 7a is a graph depicting changes to the level of energy stored in the intermediate energy storage device over time, according to the embodiments of the subject invention.
Fig. 8 is a graph depicting changes to the level of energy stored in the intermediate energy storage device over time, according to the embodiments of the subject invention.
Fig. 9 is a graph depicting changes to the level of energy stored in the intermediate energy storage device over time, according to the embodiments of the subject invention.

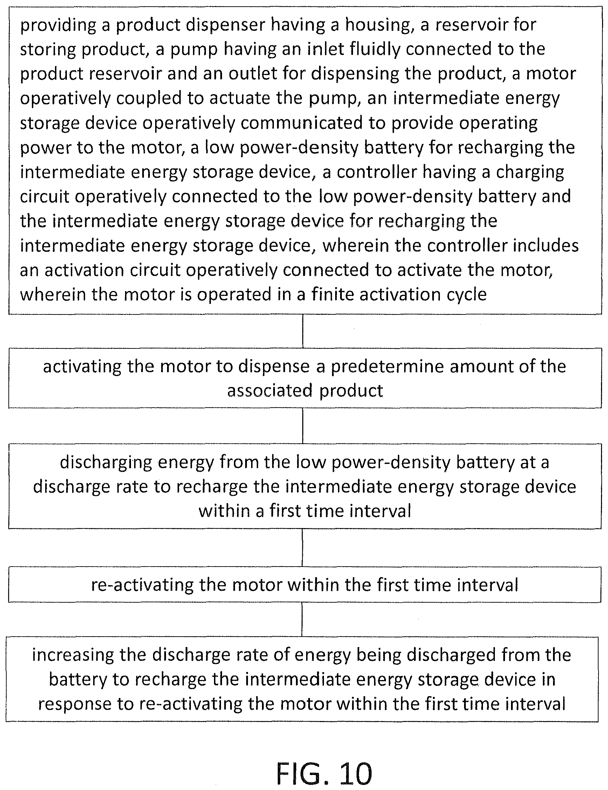

Fig. 10 is flow diagram of one method of the subject invention, according to the embodiments of the subject invention.

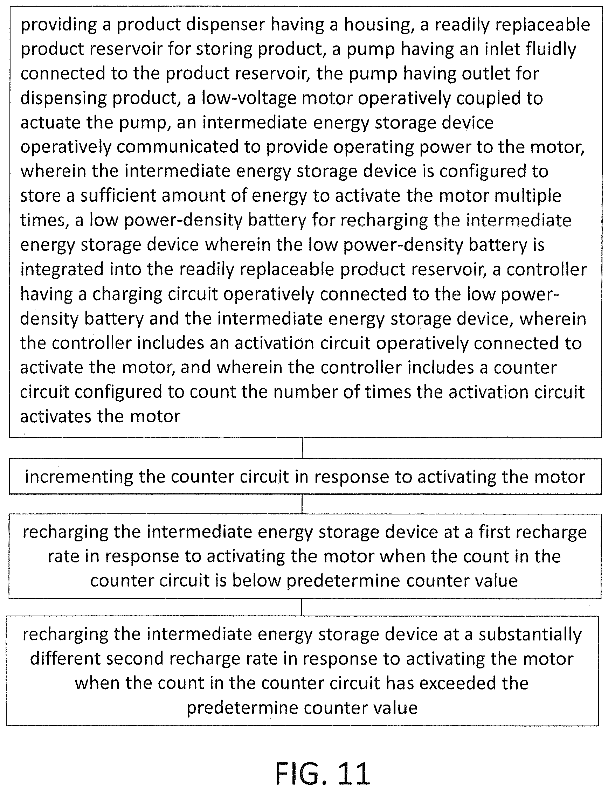

Fig. 11 is flow diagram of another method of the subject invention, according to the embodiments of the subject invention.

### Detailed Description

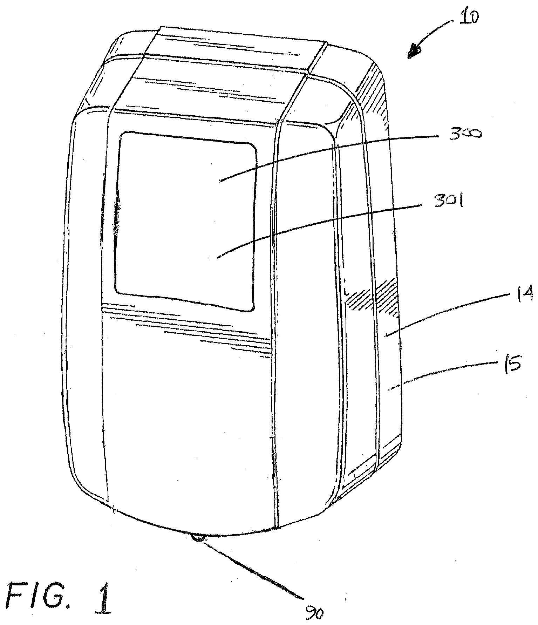

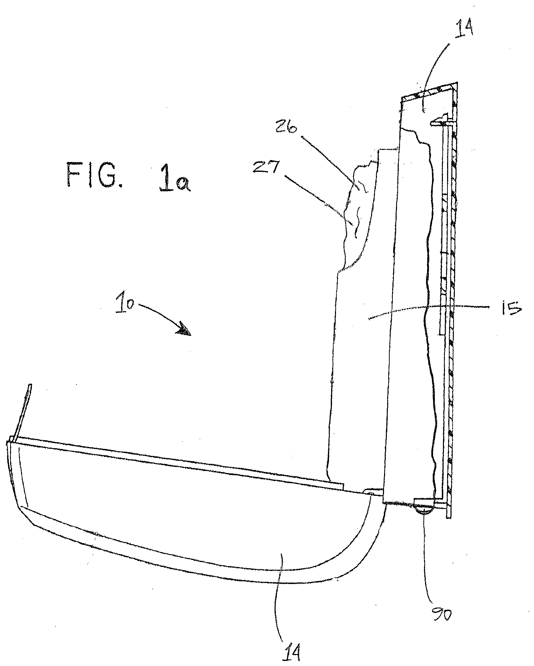

A product dispensing system, depicted in Fig. 1, dispenses a measured amount of fluid product according to the embodiments of the subject invention. In one exemplary instance, the dispensing system, shown generally at **10,** dispenses hand care products like soap, lotion or hand sanitizer, although other types of products may be similarly dispensed from the dispensing system.

In the embodiment depicted in Figs. 1 and 1a, the dispensing system **10,** also referred to as fluid dispenser **10,** includes a dispenser housing **14** or base. The dispenser housing **14** is made of one or more walls **15** constructed to support the components of the fluid dispenser **10.** Plastic may be used for cost effective manufacturing of the dispenser housing **14,** as well as other components of the system. A fluid reservoir **26** supplies fluid product to the fluid dispenser **10** and is mounted to the dispenser housing **14** in an inverted manner. The walls **15** of the dispenser housing **14** may form a concave, open top section that receives the fluid reservoir **26.** In one particular embodiment, the fluid reservoir **26,** also referred to as product reservoir **26,** may be readily replaceable. As such, the fluid reservoir **26** or product reservoir **26** comprises a replaceable product reservoir **26.**

A posterior side (not shown) of the fluid dispenser **10** may include apertures and/or slots for mounting the fluid dispenser **10** to a secure structure. In one embodiment, the dispenser housing **14** may be directly mounted to a wall or a dispenser stand (also not shown) via fasteners. In other embodiments, a mounting bracket is provided and includes mounting holes that receive fasteners for securing the mounting bracket to the wall or other structure. In this embodiment, the dispenser housing **14** may be removably attached to the mounting bracket. In that the mounting of fluid dispensers to supporting structures is known in the art, no further explanation will be provided.

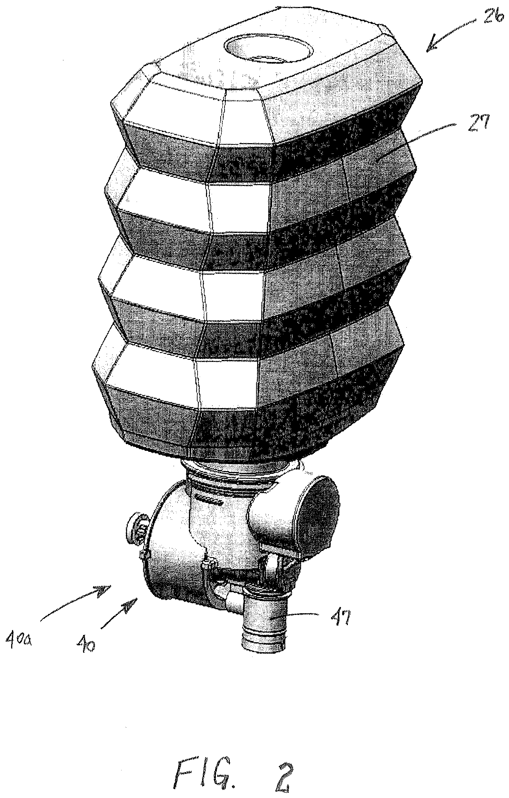

Referring now to Figs. 1, 1a and 2, product reservoir **26** is constructed to hold a dispensable product, which may be a hand care product. The walls **27** of the product reservoir **26** may be constructed of sheet-like material forming a container having an opening at one end configured for attachment to a pump in a fluid-tight (or air-tight) manner. Any type of material, shape and dimensions of the walls **27** and/or opening may be chosen as is appropriate for the storing of product therein. Blow molding, or other plastic molding process, may be used to form the fluid reservoir **26.**

As mentioned above, the product reservoir **26** is constructed as a readily replaceable container. By replaceable it is meant that the container is intended to be discarded when emptied of product and substituted with a sealed refill replacement. In addition to the product reservoir **26,** the pump and nozzle, may also be discarded when the product reservoir **26** is exhausted. Thus, a new assembly of reservoir, pump and nozzle can be supplied every time the fluid dispenser **10** is refilled.

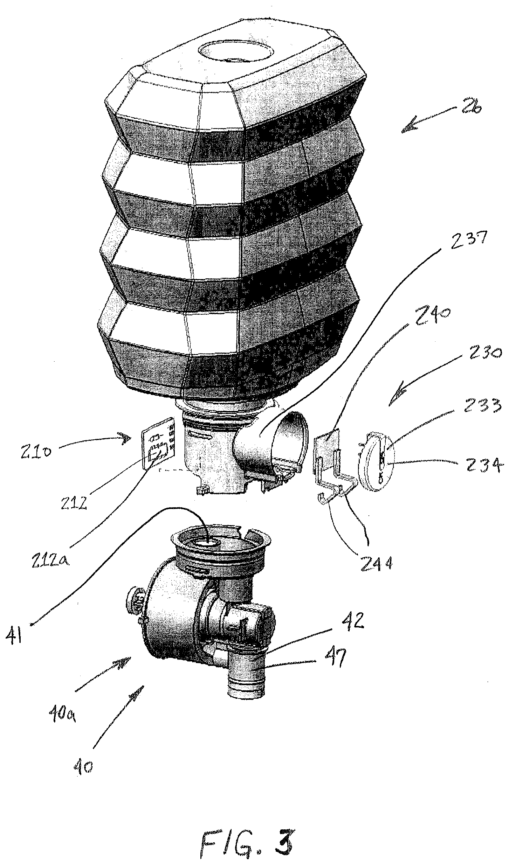

Still referencing Fig. 2 and now also Fig. 3, an exemplary embodiment of a dispenser pump **40** is shown. The pump **40** includes a pump inlet **41** and a pump outlet **42.** The pump outlet is fixedly connected to a nozzle **47** for dispensing fluid product from the fluid dispenser **10.** The pump inlet is connected to the fluid reservoir **26.** Specifically, the pump inlet is fixedly attached and sealed to the opening of the fluid reservoir **26** in a fluid-tight or air-tight manner. Accordingly, the pump **40,** nozzle **47** and fluid reservoir **26** are provided as an assembly. In this manner, every wetted component of the fluid dispenser **10** is disposed of when the fluid reservoir **26** is replaced.

The pump **40** induces pressure in the system, either positively or negatively (vacuum pressure) to convey fluid from the reservoir **26** to the nozzle **47.** In one particular embodiment, the pump **40** may be a piston pump **40a,** although other types of pumping mechanisms including but not limited to gear pumps or reciprocating pumps may be employed. The pump **40** may further incorporate one or more valves, which may be check valves, for ensuring that fluid flows from the pumping chamber and out through the nozzle, i.e. not back into the reservoir.

The pump **40** may be driven by a motor **48.** The motor **48** may be either a DC or an AC motor. However, in one preferred embodiment, the motor is a low-voltage, DC motor **48** that draws power from an onboard power supply which may comprise one or more batteries to be discussed in detail below. The motor may be connected to a mechanical transmission, not shown in the figures. The transmission may convert rotational motion, as provided by the output shaft of the motor, into linear motion for use in reciprocating the piston of pump **40.** In one particular embodiment, the transmission may comprise a cam actuator. Together the motor, transmission and pump are configured to dispense a predetermined quantity of fluid product for each operating cycle. Notably, the motor **48** may be directly connected to the pump without incorporating a transmission.

With continued reference to Fig. 3, a validation key or tag may be implemented between the product reservoir **26** and dispensing system **10** for validating the contents of the product reservoir **26.** In one particular embodiment, product reservoir **26** includes an electronic key, not shown. The electronic key may employ one or more types of systems using near-field communications. More specifically, the key may comprise an RFID (Radio Frequency Identification) tag, which may be either passive or active. A corresponding interrogator, not shown, may be mounted to the dispenser housing **14.** When the product reservoir **26** is installed into the dispenser **10,** the interrogator will automatically "ping" the electronic key to verify that the correct product reservoir is being used. If an incorrect product reservoir has been installed, the dispensing system controller **170** functions to prevent operation of the dispenser. Depending on the range, i.e. strength, of the RFID signals, it is contemplated that the interrogator may be mounted onto a circuit board located in the system controller **170** or elsewhere in the dispensing system **10.** Alternative embodiments are considered where a near field magnetic induction system, not shown, is used as an electronic tag. In this type of tagging system, specially tuned coiled inductors are used to ensure that the appropriate product reservoir **26** is being used with the correct dispenser. The system uses at least one emitter coil disposed within the dispenser and electrically communicated with the dispenser controller **170.** The emitter coil is connected with one or more electrical components, which may include in an exemplary manner capacitors. Those skilled in the art will recognize that different values of capacitance along with placement of the capacitors in the circuit provide nearly endless combinations of electronic keying. Accordingly, a receiver coil, also not shown, may be installed with the product reservoir **26.** It follows that the receiver coil is similarly tuned with the emitter coil. In this way, the controller may determine whether or not the proper product reservoir **26** has been installed in the dispenser **10.**

In another embodiment, a validation key may be employed where the product reservoir **26** is directly connected with the controller **170.** By directly connected it is meant that one or more sets of conductors are physically brought into contact for the purpose of transmitting electrical signals between the components of the product reservoir **26** and one or more components of the dispensing system **10.** The validation key may comprise any form of electronic keying chosen with sound judgment to those skilled in the art. Similar to that described above, the electronic key may be either passive or active. In one particular embodiment, conductors, which may be conductors **244,** are included that run from the validation key to contact terminals, not shown, disposed on an exterior portion of the product reservoir **26.** The exposed terminals may be electrically communicated with conductors **244** or may be configured to directly contact matching terminals in the dispensing system **10.** As such, when the product reservoir **26** is installed into the dispensing system **10,** the sets of contact terminals are brought into electrical contact with each other thereby directly electrically communicating the key with the controller **170.** It is noted that other forms of electrical communication may be transmitted via the direct connection of the terminals including but not limited to the exchange of other types of data with the controller **170** and/or the transmission of power between the product reservoir **26** and the onboard power supply. Still, skilled artisans will appreciate that other forms of tagging may be used, examples of which may include keyed mechanical fittings or optical sensor systems. Any manner of ensuring that the dispensing system **10** works only with the proper product reservoir **26** may be chosen as is consistent with the subject invention described herein.

In one particular embodiment, sensors **90** may be incorporated into the dispensing system **10.** These sensors are used to detect motion for hands-free activation of the dispensing system **10.** The sensors **90** may comprise one or more IR emitters and detectors. The emitter-detector pair(s) may be oriented in a manner that ensures consistent activation of the dispensing system **10** in a particular region under the nozzle **16.** Still, other types of sensing components may be used to facilitate hands-free activation of the dispensing system without departing from the intended scope of coverage of the embodiments of the subject invention.

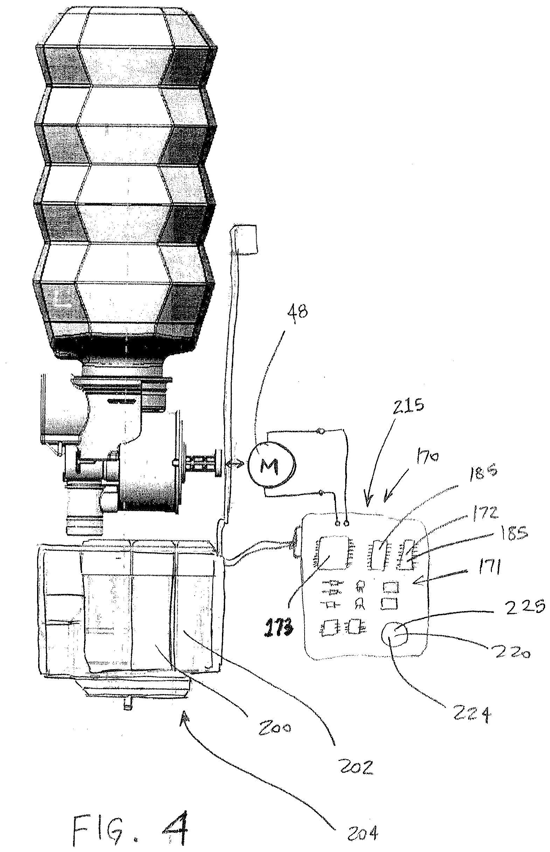

With reference now to Fig. 4, the dispensing system **10** includes a controller or control system **170** comprising one or more electronic circuits **171** for controlling the various functions of the dispensing system **10.** The electronic circuitry **171** may reside on a printed circuit board and received in a suitable enclosure within the dispenser housing **14.**

The electronic circuitry **171** may comprise digital electronic circuitry **172** designed to receive and process data relating to operation of the dispensing system **10.** In particular, the digital electronic circuitry **172** may function to receive input signals from the electronic validation key **40,** onboard sensors **90,** as well as other components in the dispensing system **10.** Such circuitry may communicate with analog-to-digital converters that convert output signals from components of the keying device and/or sensors **90.** Other sensors may be incorporated that measure the amount of product remaining in the reservoir **26.**

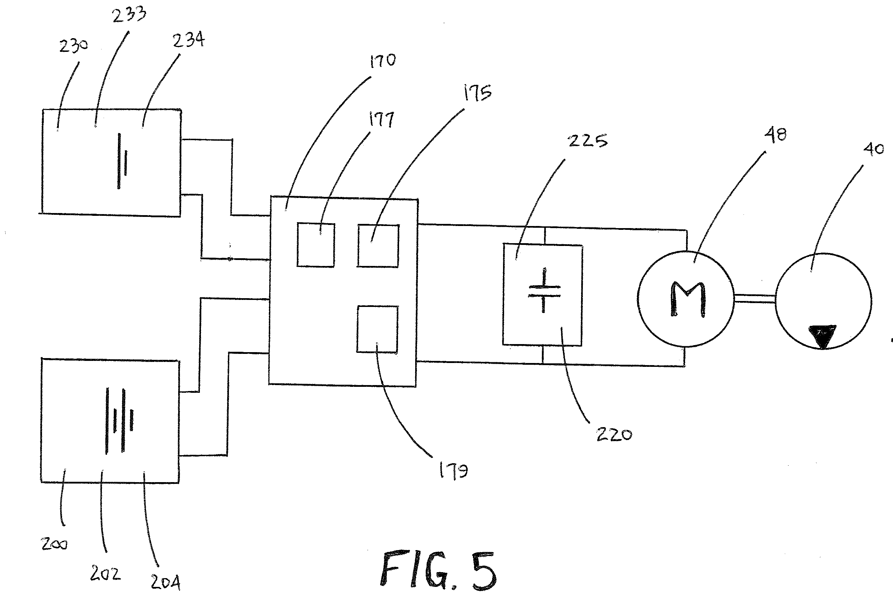

In one embodiment, the digital electronic circuitry **172** may comprise one or more logic processors **173,** which may be selectively programmable. Logic processor **173** may be operable to execute instructions as coded in an algorithm. In this way, a coded sequence of instructions implemented by the logic processors, as well as hard wired circuitry, may be used to control operation of the dispensing system **10.** It will be appreciated that the digital electronic circuitry **172** may further include electronic data storage **185** or memory **185,** which may comprise: memory registers internal to the logic processor, volatile memory such as DRAM or SD-RAM and/or forms of non-volatile memory. Moreover, the digital electronic circuitry **172** may include one or more timer circuits **175** (reference Fig. 5). The timer circuits may be used in determining how fast or frequent the dispensing system **10** is being used. In one embodiment, the timer circuit(s) **175** are used to measure how many times the motor **48** has been activated within a given time period or whether onboard energy storage devices have been recharged within a particular time interval, both of which may be used to adjust the discharge rate of the batteries, as will be discussed further below.

The digital electronic circuitry **172** also functions to output signals used to control operation of the dispensing system **10,** like for example operation of the electric motor **48.** The output signals may comprise low voltage DC signals. The outputs signals may engage one or more amplifiers and/or relays that directly control actuation of the motor **48,** although other means of controlling the motor **48** may be chosen with sound judgment. It is noted here that directly controlling activation of the motor **48** may encompass the selective connection of an electrical power source, like for example an intermediate energy storage device, to the motor **48.** In whatever configuration, persons of skill in the art will understand the use and implementation of a wide array of circuitry as may be necessary for controlling operation of the motor **48** of the dispensing system **10.**

With reference to Figs. 4 and 5, power to activate the motor **48** may be supplied from multiple sources of power. In one embodiment, the dispensing system **10** may incorporate a first onboard energy supply device **200.** The first energy supply device **200** may comprise an electrochemical cell that converts chemical energy into electrical energy. One such example includes Alkaline batteries **202,** which come in various output capacities including standard AA, C or D cell batteries. Other types of batteries **202** may be used without limiting the scope of the claimed invention. The energy supply device **200** may comprise a bank of batteries **204** received within the dispenser housing **14.** It is contemplated in one particular embodiment that the bank of batteries **204** is permanently installed into the dispensing system **10.** By permanently installed it is meant that the bank of batteries **204** is housed within the structural framework of the dispenser and is not readily accessible. While it is contemplated in other embodiments that the bank of batteries **204** may be replaced, in general the batteries of the first energy supply device **200** are not readily replaceable. It is noted here that the size and quantity of batteries **202** may be selected as is suitable for use with a particular type of dispensing system **10** and should not be construed as limiting. It is contemplated in one or more alternative embodiments that the power to actuate the motor may be substituted by or supplemented by other sources of energy examples of which may include, but are not limited to, photovoltaic cells.

With reference to Figs. 3 and 5, a second onboard energy supply device **230** may be integrated into the product reservoir **26,** also referred to as a refill container **26.** In a manner similar to that of the first energy supply device **200,** second energy supply device **230** may also be selectively, operatively connected to supply energy for activating the motor **48** as enabled by the controller **170.** The second energy supply device **230** may comprise one or more batteries **233** incorporated into the structure **237,** e.g. frame or housing, of the product reservoir **26.** In one particular embodiment, battery **233** may comprise a low power-density battery **233.** In one particular embodiment, the low power-density battery **233** may comprise a button cell battery or coin cell battery **234.** As is known in the art, coin cells are known for having low discharge rates, as well as for having a small size and light weight. Notably, while coin cell **234** may be chosen because of its footprint, other types of batteries may be incorporated into the product reservoir **26** without departing from the intended scope of coverage of the subject invention. For example, AA or AAA cell alkaline batteries may be integrated into product reservoir **26.** It will be readily seen that a fresh supply of energy from the second onboard energy supply device **230** is provided every time the product reservoir **26** is replaced.

The housing of the product reservoir **26** may be fashioned having one or more cavities configured to receive or enclose the second energy supply device **230.** A conductor plate **240** may include electrically conductive leads **244** that connect to respective ends of the second energy supply device **230.** In the embodiment incorporating coin cells, i.e. coin cell batteries **234,** conductive leads **244** connect to the positive and negative terminals of the battery. The conductor plate **240** may also include conductors that direct the flow of current from the coin cell **234** to the controller **170,** the motor **48** or intermediate energy storage device. In this manner, the second energy supply device **230** or batteries **234** are integrated into the product reservoir **26,** i.e. replaceable product reservoir **26.** It is noted here that the conductive leads **244** may be used to concurrently transmit data along with power, as discussed above. The data may relate to keying information, remaining level of product remaining in the reservoir **26,** or any other type of information to be communicated between the product reservoir **26** and the controller **170.**

As indicated above, the controller **170** is operable to direct power from either or both of the first and second energy supply devices **200, 230** for use in activating the motor **48.** It will be understood that the first and second energy supply devices **200, 230** may discharge energy at one of a plurality of substantially different discharge rates as facilitated by the controller **170.** In one particular embodiment, power to activate the motor **48** may be delivered to and temporarily stored in an intermediate energy storage device **220** which is electrically positioned between the first and second energy supply devices **200, 230** and the motor **48.** The intermediate energy storage device **220** is capable of accumulating energy from the first and second energy supply devices **200, 230** and may be selectively connected to deliver operating power to the motor **48** as controlled by the controller **170.** The intermediate energy storage device **220** may be capable of storing a charge of energy sufficient to activate the motor **48** over multiple activation cycles. In one instance, the intermediate energy storage device **220** is capable of activating the motor 5 to 15 times in a single charge, although the intermediate energy storage device **220** may have a greater or lesser energy storage capacity.

It is noted here that the motor **48** is characterized as having a finite activation cycle. By finite activation cycle it is meant that the motor **48** does not run continuously or indefinitely but is characterized as having a distinct start and stop time. The motor activation cycle corresponds directly to the pump actuation cycle, which dispenses a dosed quantity of product from dispensing system **10.** After product has been dispensed, the controller **170** deactivates the motor **48** until it is re-activated again by the user in a subsequent dispense event.

The intermediate energy storage device **220** may comprise an electrostatic storage device, one example being a capacitor **224.** The capacitor **224** may be constructed with a standard dielectric core or alternatively may include an electrochemical core, one example of which may comprise a supercapacitor **225.** Accordingly, the intermediate energy storage device **220** is capable of holding a charge for significant lengths of time between dispense events.

Charging or recharging of the intermediate energy storage device **220** may be regulated by the controller **170.** The controller **170** may include a charging circuit **177** for connecting the sources of energy **200, 230** to the energy storage device **220.** In one embodiment, the controller **170** also includes a sensing circuit, or a monitoring circuit **179,** for measuring the amount of energy remaining in the supercapacitor **225,** i.e. intermediate energy storage device **220.** Upon detecting a reduction in the energy level of the supercapacitor **225,** the controller **170** (which may utilize the logic processor **173**) may connect one or both of the batteries **202, 234,** i.e. energy storage devices **200, 230** to the supercapacitor **225** until the supercapacitor **225** has been recharged (reference e₁ in Figs. 5-8). The controller **170** functions to selectively connect one or both of the batteries **202, 234** to recharge the supercapacitor **225** based in part on dispenser usage data processed by the controller **170** (to be discussed in detail below). As indicated above, firmware and/or software may be used in the process.

In a preferred embodiment, energy stored in the supercapacitor **225** or intermediate energy storage device **220** is replenished primarily from the battery **234** or second energy supply device **230.** Accordingly, energy provided by the first energy supply device **200** (i.e. the batteries in the dispenser housing) is relied on primarily as a backup for use in situations where rapid dispensing activity occurs. Once energy in the supercapacitor **225** has dropped below an upper threshold level of energy e₁ (i.e. a predetermined level of energy), as occurs when the supercapacitor **225** has been engaged to provide power to the motor **48**, the controller **170** initiates the discharge of energy from the battery **234** to recharge the supercapacitor **225**. However, in the event that the supercapacitor **225** has not had sufficient time to recharge, i.e. has not had sufficient time to recharge within a predetermined time interval, the controller **170** may draw power from the first energy supply device **200** to recharge the supercapacitor **225** so that operation of the dispensing system **10** is not hindered or interrupted.

The controller **170** may draw energy from battery **234** at different discharge rates based on how much energy is remaining in the supercapacitor **225.** In general, the controller **170** is programmed or hard wired to minimize the rate at which energy is drawn from the battery **234.** For instance, when a dispense event occurs, the controller **170** will draw energy from the battery **234** at a first minimal discharge rate in accordance with maximizing the useful life of the battery **234.** Additionally, the controller **170** may be programmed to increase the rate at which energy is drawn from the battery **234,** which changes in relation to the level of charge remaining in the supercapacitor **225.**

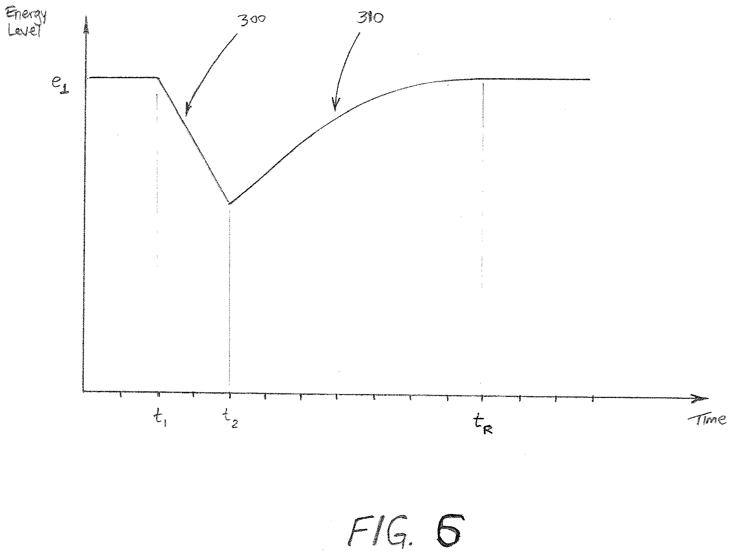

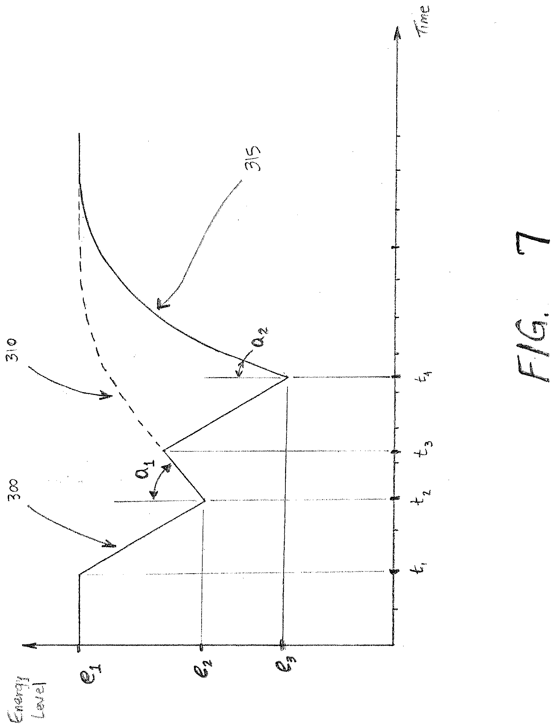

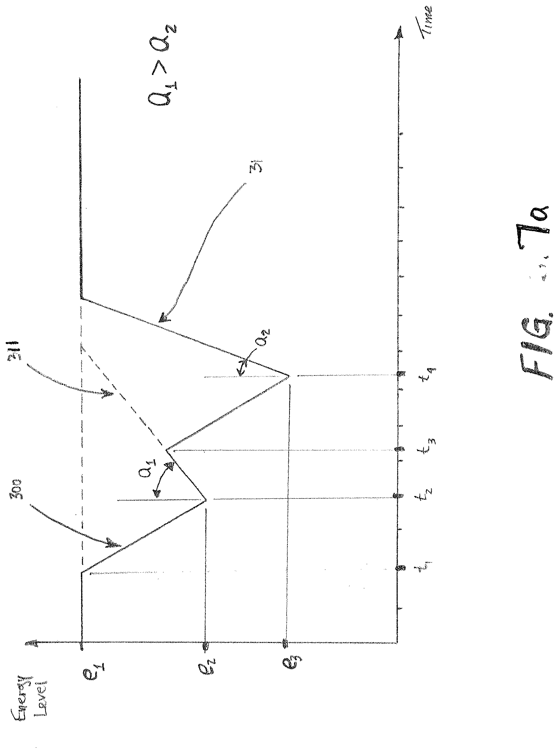

Referencing Figs. 5 and 6, an example will illustrate changes to the level of energy stored in the intermediate energy storage device **220**. The energy storage device **220** may be initially charged to a predetermined level of energy (represented by **e₁** in Fig. 6), which may be the maximum level of energy that the energy storage device **220** is capable of storing. When a dispense event occurs, energy from the energy storage device **220** is discharged to activate the motor **48**. The span of time between **t₁** and **t₂** represents the finite activation cycle of the low-voltage motor **48,** as discussed above. To recharge the energy storage device **220** (reference **t₂** in Fig. 6), the controller **170** may engage the charging circuit **177** to draw power from the energy supply device **230** at a first charging rate **310**. The rate of recharging **310** may change exponentially whereby the level of charge in the energy storage device **220** asymptotically approaches the initial predetermined level of energy **e₁** as shown in the figures. As such the recharge rate **310** may be referred to as a recharge profile **310**. Notably, alternate embodiments are contemplated where the recharge rate **311** is substantially linear as referenced by the timing diagram in Fig. 7a.

It will be appreciated that whether the energy storage device **220** is recharged at a linear rate or at an exponential rate, the time interval (represented by the difference between **t₂** and **t_{R}**) for recharging the energy storage device **220** should be construed as being finite. In any case, the energy storage device **220** may be considered to be recharged, i.e. fully charged, when the energy level is greater than approximately 95% of the upper threshold energy level, mentioned above.

According to one embodiment, the motor **48** must complete its activation cycle before it can be re-activated. Once the motor activation cycle has been completed, the controller **170** will initiate charging of the intermediate energy storage device **220,** e.g. supercapacitor **225,** by discharging energy from the second energy supply device **230.**

Referencing Figs. 5 through 7, if the dispensing system is re-activated (referenced by **t₃** in Fig. 7) before the intermediate storage device **220** has been recharged or restored to the predetermined level of energy e₁, the controller **170** will change the rate at which energy is drawn from the second energy supply device **230** to increase the recharge rate **315**, or recharge profile **315**, of the intermediate energy storage device **220**. Skilled artisans will readily see that the initial slope **a₂** of recharge rate **315** is steeper than the initial slope **a₁** of recharge rate **310**, which represents the increase in the recharge rate and an increased drain on the batteries **234**. Given an initial or first recharge rate, e.g. recharge rate **310,** skilled artisans will readily see that a first time interval may be derived within which the energy storage device **220** will be recharged. From the aforementioned discussion, it follows that if the motor **48** is re-activated within the first time interval, the controller **170** will increase the first discharge rate of energy from the energy storage device to a second greater discharge rate.

Still referencing Fig. 7, in one embodiment, intermediate energy level reference values (represented generally by **e₂** and **e₃**) for the energy storage device **220** may be predefined and the values stored in the controller **170** for comparison with measured levels of energy remaining in the energy storage device **220**. Accordingly, the recharge rate **315** or recharge profile **315** may then change only when the measured level of energy in the energy storage device **220** has dropped below each of the respective intermediate energy level reference values. Fig. 7 depicts the intermediate energy level value **e₂** coinciding with the end of the motor activation cycle **300**, which relates directly to the amount of energy needed to operate the motor **48** for a single activation cycle. However, the intermediate energy level reference values **e₂** may be defined as greater than or less than the amount of energy needed to operate the motor **48** over a single activation cycle. Any intermediate energy level values may be defined as is appropriate for use with the embodiments of the subject invention. Notably, the difference in energy level values between each of the respective intermediate threshold levels may not necessarily be equal in magnitude but may vary. For example, the difference between **e₁** and **e₂** may be greater than or less than the difference between **e₂** and **e₃**.

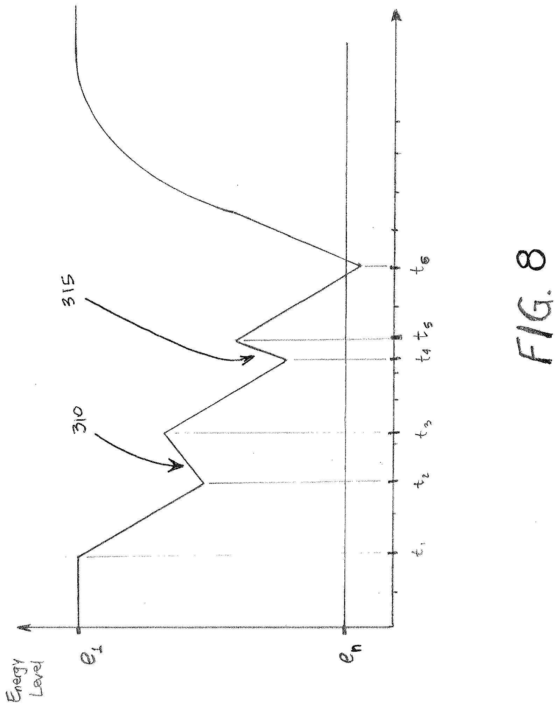

Referencing Fig. 8, another embodiment of the subject invention will now be discussed. A lower threshold energy level value **eₙ** may be defined whereby the level of energy remaining in the energy storage device **220** is deemed to be critically low. This may occur when the dispenser **10** has been repeatedly activated within a relatively short time period. In this situation, the second energy supply device **230,** which may be a coin cell battery **234,** may not be capable of recharging the energy supply device **220** at the current dispenser activity level. To obviate the situation, the controller **170** may be programmed to detect when the level of energy in the energy storage device **220** has dropped below the lower threshold energy level **eₙ**. In this instance, the controller **170** may direct energy to recharge the energy storage device **230** from the first energy supply device **200**, which may be batteries stored in the dispenser housing. One particular embodiment is contemplated where the first energy supply device **200** supplements the second energy supply device **230** to recharge the energy storage device **220.** However, another embodiment is contemplated wherein the first energy supply device **200** is connected to recharge the energy storage device **220** instead of the second energy supply device **230.** In other words, in this embodiment the second energy supply device **230** is deactivated from recharging the energy storage device **220.**

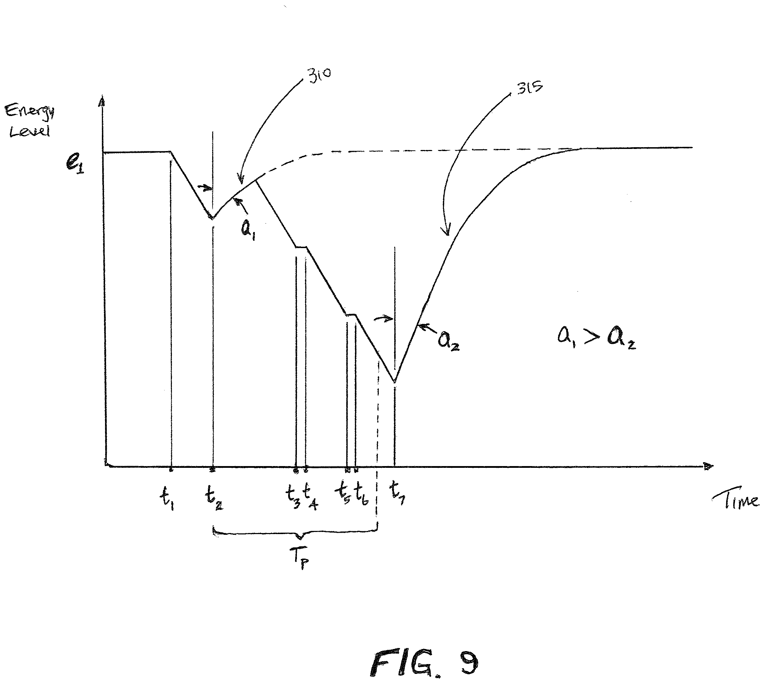

With reference to Fig. 9, in one embodiment, the controller **170** may not increase the first recharge rate **310** until the motor **48** has been rapidly activated. Stated differently, the controller **170** will increase the rate of drawing energy from energy supply device **230** only after several dispense events have occurred within a predetermined time interval **Tₚ**. For example, when the dispensing system **10** is initially activated, the controller **170** will recharge the energy storage device **220** at the first recharge rate **310**, starting at **t₂** after activation of the motor **48**. The controller **170** may concurrently activate a timer. If the motor **48** is activated more than two times before the timer **Tₚ** has expired, the controller **170** will then increase the recharge rate to replenish energy in the energy storage device **220** more rapidly. In other words, when the controller **170** detects a rapid decrease in the energy level of the storage device **220,** the controller **170** will increase the rate of energy discharged from the second energy supply device **230** to recharge the energy storage device **220.** Notably, the number of dispensing events (i.e. motor activation cycles) that must occur in a predetermined timeframe before the controller adjusts the rate of drawing energy from supply device **230** may vary as is appropriate for use with a particular dispensing system.

In another embodiment of the subject invention, the change in the discharge rate of the energy supply device **230** may follow a profile related, not only to the speed at which dispensing events occur, but also to the quantity of fluid product remaining in the product reservoir **26.** In this embodiment, the controller **170** may employ a counting circuit, which increments with every actuation of the dispensing system **10** and more specifically with every activation of the motor. The aforementioned represents one embodiment in which dispenser usage data is collected by the controller **170.** From the counter, the controller **170** can estimate how much product is remaining in the product reservoir **26.** Accordingly, the controller **170** can adjust the discharge rate of supply device **230** based on the amount of product remaining in the product reservoir **26.** For larger volumes of product remaining in the product reservoir **26,** the controller **170** may follow a discharge rate profile that more conservatively draws energy from supply device **230,** similar to that of the embodiment previously described. However, for situations where the amount of product remaining in the supply device **200** is relatively small, e.g. when the container is approaching empty, the controller **170** may draw energy more aggressively from supply device **230.** In other words, the rate at which energy from the energy supply device **230** is drawn to recharge energy storage device **220** may be set by the controller **170** at a first lower discharge rate for larger volumes of product remaining in the product reservoir **26** and at a second higher discharge rate for smaller volumes of product remaining in the product reservoir **26.**

In one particular embodiment, the controller **170** may be programmed to adjust the rate of discharge for storage device **220** based on four discrete levels of fluid product remaining in the product reservoir **26.** The four discrete levels may occur evenly at the quarter-fill levels of the product reservoir **26,** i.e. 25%, 50%, 75%, 100%. However it is contemplated that the discrete levels may not be equal in magnitude. Rather, the levels may be weighted unevenly based in part on the size, i.e. storage capacity, of the storage device **220.** For example, the first discrete level may be set when 50% of the product is remaining in the product reservoir **36.** The second discrete level may accordingly be set at 25%. The last two levels may respectively be set at 12% and 6% respectively. Persons of skill in the art will readily understand that other nonlinear profiles may be incorporated as is useful for a particular type of product reservoir **26.**

Referencing Fig. 3 once again, the product reservoir **26** may include a memory storage device, shown generally at **210.** The memory storage device **210** may comprise non-volatile memory **212,** examples of which include: read-only memory, flash memory, and/or optical or magnetic memory storage. In particular, the memory storage device **210** comprises memory that can be rewritten after installation into the dispenser. It follows that the memory storage device **210** may be electrically communicated to the controller **170** whereby information can be read from and/or downloaded to the memory device **210.** Memory, i.e. the memory storage device **210,** may be used to store information used by the controller and/or logic processor for operating the product dispenser **10.** Such information may comprise data representing an algorithm that may be executed by the logic processor. Memory may also be used to store data associated with sensor feedback. Additionally, memory may be used to store information, either permanently or temporarily, related to dispenser usage data. Still, any manner of utilizing the memory storage device **210** may be chosen as is appropriate for use with the embodiment of the subject invention. Skilled artisans will appreciate that electrical communication between memory device **210** and controller **170** may include wireless communication as well as direct electrical connections.

In one preferred embodiment, the memory storage device **210** comprises flash memory **212a** that stores information related to the amount product initially stored into the product reservoir **26.** More specifically, flash memory **212a** stores data identifying the initial amount of product stored in the product reservoir **26** and may store data related to the amount product remaining in the product reservoir **26** after every dispensing event. Notably, other types of information may be stored in the memory device **210.** Such information may include but is not limited to: the date the product reservoir was installed, product expiration information, the type of product stored in the product reservoir (i.e. keying or tagging information), as well as other information deemed appropriate to persons of ordinary skill in the art. Accordingly, the discharge profile used to draw energy from the first and second energy supply devices **200, 230,** as well as the intermediate energy storage device **220,** may be governed by the controller **170** in response to the data stored in memory device **210.**

Another embodiment of the subject invention is considered where the batteries **233** are intentionally drained of energy when the volume of product remaining in the product reservoir **26** is close to zero or when the volume crosses a minimum threshold of remaining product. When the threshold is reached, the controller **170** may connect the batteries **233** to one or more energy draining circuits **215** (reference Fig. 4), which may comprise a resistor or other short circuit device that substantially drains or depletes the energy in the batteries **233.** Notably, the controller **170** may check the level of energy stored in the intermediate energy storage device **220** prior to draining the batteries **233.** In this way, the intermediate energy storage device **220** may be recharged if needed thus maximizing the usefulness of the batteries **233** before disposal thereof. In any case, information from memory stored onboard the product reservoir **26,** namely memory device **210,** may be used to determine the appropriate time to engage the energy draining circuits **215.**

It is noted here that while some of the embodiments described herein discuss the specific application of providing power to operate a motor, similar applications may be made to other components of the dispensing system 10. For example, another embodiment is presently described where in a manner similar to that described above, the controller **170** may provide power to operate a display unit **300** received by the housing **14.** The display unit **300** may comprise an LCD display **301** or other type displaying device that communicates with the user either visually or audibly. Information such as battery status or remaining reservoir refill level may be depicted on the display **300.** Additionally, advertisements may be depicted on the display **300.** Still other information may be displayed, which pertains to network connectivity or even dispenser usage in the instance where dispenser data is used to monitor hygiene compliance. Other examples of dispensing system components may include solenoids, wireless transceivers, indicator lights, and the like. Such device(s) may be activated periodically and similarly may have a finite activation cycle. Accordingly, power to operate these types of devices may be supplied from the intermediate energy storage device **220.** It follows that recharging of the intermediate energy storage device **220** will be accomplished in a similar manner to that of the motor **48** described above. In this manner, application of the principles described herein may be applied to any of the dispensing system components.

Having illustrated and described the principles of the dispensing system in one or more embodiments, it should be readily apparent to those skilled in the art that the invention can be modified in arrangement and detail without departing from its scope, that is defined by the appended claims.

## Claims

1. A product dispenser (10), comprising:
a dispenser housing (14);
a readily replaceable product reservoir (26) for storing an associated product;
a battery (233) integrated into the readily replaceable product reservoir (26);
a pump (40) having an inlet (41) fluidly connected to the readily replaceable product reservoir (26), the pump (40) having an outlet (42) for dispensing the associated product;
an electrically powered, low-voltage motor (48) operatively coupled to actuate the pump (40);
an intermediate energy storage device (220) operatively communicated to provide operating power to the motor (48), wherein the intermediate energy storage device (220) is configured to store a predetermined level of energy (e₁) that is sufficient to activate the motor (48) through multiple activation cycles; and
a controller (170) operatively communicated to selectively activate the motor (48), wherein the controller (170) is operatively communicated to the battery (233) and to the intermediate energy storage device (220), wherein the controller (170) initiates discharging energy from the battery (233) in response to the motor (48) being activated for recharging the intermediate energy storage device (220) to the predetermined level of energy (e₁),
wherein the controller (170) is operable to selectively initiate discharging energy from the battery (233) at one of a plurality of substantially different discharge rates, and
wherein when the motor (48) is activated the controller (170) changes the discharge rate of discharging energy from the battery (233) if the intermediate energy storage device (220) has not been substantially recharged to the predetermined level of energy.

2. The product dispenser as defined in claim 1, wherein the intermediate energy storage device (220) is a supercapacitor (225).

3. The product dispenser as defined in claim 1, wherein the battery (233) is a coin cell battery (234).

4. The product dispenser as defined in claim 1, where in response to activating the motor (48) the controller (170) initiates discharging energy from the battery (233) at a first discharge rate to recharge the intermediate energy storage device (220) within a first time interval; and
where in response to activating the motor (48) again within the first time interval the controller (170) increases the first discharge rate to a greater second discharge rate.

5. The product dispenser as defined in claim 1, further comprising:
an energy source (200) operatively mounted to the dispenser housing (14) that is operatively communicated to the intermediate energy storage device (220); and,
wherein the controller (170) is operable to selectively initiate discharging energy from one or both of the battery (233) integrated into the readily replaceable product reservoir (26) and the energy source (200) operatively mounted to the dispenser housing (14) for recharging the intermediate energy storage device (220).

6. The product dispenser as defined in claim 5, wherein when the energy level in the intermediate energy storage device (220) falls below a lower threshold energy level (eₙ), the controller (170) initiates discharging energy from the energy source (200) operatively mounted to the dispenser housing (14) to recharge the intermediate energy storage device (220).

7. The product dispenser as defined in claim 6, wherein when the energy level in the intermediate energy storage device (220) falls below the lower threshold energy level (eₙ), the controller (170) deactivates the flow of energy from the battery (233) integrated into the readily replaceable product reservoir (26).

8. The product dispenser as defined in claim 6, wherein when the energy level in the intermediate energy storage device (220) falls below the lower threshold energy level (eₙ), the controller (170) initiates the flow of energy from the battery (233) integrated into the readily replaceable product reservoir (26) and from the energy source (200) operatively mounted to the dispenser housing (14) to recharge the intermediate energy storage device (220).

9. A method of operating a product dispenser (10), comprising the steps of:
providing a product dispenser (10) having a dispenser housing (14), a product reservoir (26) for storing an associated product, a pump (40) having an inlet (41) fluidly connected to the product reservoir (26), the pump (40) having an outlet (42) for dispensing the associated product, a motor (48) operatively coupled to actuate the pump (40), an intermediate energy storage device (220) operatively communicated to provide operating power to the motor (48), a low power-density battery (233) for recharging the intermediate energy storage device (220), a controller (170) having a charging circuit (177) operatively connected to the low power-density battery (233) and the intermediate energy storage device (220) for recharging the intermediate energy storage device (220), wherein the controller (170) includes an activation circuit operatively connected to activate the motor (48), wherein the motor (48) is operated in a finite activation cycle;
activating the motor (48) to dispense a predetermine amount of the associated product;
discharging energy from the low power-density battery (233) at a discharge rate to recharge the intermediate energy storage device (220) within a first time interval;
re-activating the motor (48) within the first time interval; and
increasing the discharge rate of energy being discharged from the battery (233) to recharge the intermediate energy storage device (220) in response to re-activating the motor (48) within the first time interval.

10. The method as defined in claim 9, wherein the low power-density battery (233) is a coin cell battery (234) integrated into the product reservoir (26), and
wherein the product reservoir (26) is a readily replaceable, disposable product reservoir (26).

11. The method as defined in claim 9, wherein the controller includes a monitoring circuit operatively communicated to the intermediate energy storage device for monitoring the level of energy stored in the intermediate energy storage device; and further comprising the steps of:
monitoring the level of energy stored in the intermediate energy storage device,
defining a critically low threshold energy level (eₙ) of energy stored in the intermediate energy storage device (220); and,
providing a product dispenser (10) having an alternate energy source (200) operatively mounted to the dispenser housing (14), and
wherein the controller (170) selectively recharges the intermediate energy storage device (220) from one or both of the low power-density battery (233) and the alternate energy source (200) in response to level of energy in the intermediate energy storage device (220) falling below the critically low threshold energy level (eₙ).

12. The method as defined in claim 9, further comprising the step of: progressively increasing the rate of energy being discharged from the low power-density battery (233) in response to repeatedly re-activating the motor (48) within the first time interval.

13. The method of operating a product dispenser as defined in claim 9, wherein the product reservoir (26) is a readily replaceable product reservoir (26), the motor (48) is a low-voltage motor (48), the intermediate energy storage device (220) is configured to store a sufficient amount of energy to activate the motor (48) multiple times, the low power-density battery (233) is integrated into the readily replaceable product reservoir (26), and the controller (170) includes a counter circuit configured to count the number of times the activation circuit activates the motor (48); the method further comprising the step of:
incrementing the counter circuit in response to activating the motor (48);
wherein the intermediate energy storage device (220) is recharged at a first recharge rate in response to activating the motor (48) when the count in the counter circuit is below predetermine counter value; and
the intermediate energy storage device (220) is recharged at a substantially different second recharge rate in response to activating the motor (48) when the count in the counter circuit has exceeded the predetermine counter value.

14. The method as defined in claim 13, wherein the step of recharging the intermediate energy storage device (220) at a substantially different second recharge rate in response to activating the motor (48) when the count in the counter circuit has exceeded the predetermine counter value, comprises the step of:
recharging the intermediate energy storage device (220) at a greater second recharge rate in response to activating the motor (48) when the count in the counter circuit has exceeded the predetermine counter value.

15. The method as defined in claim 13, further comprising the step of: engaging the controller (170) to substantially empty the low power-density battery (233) of energy when the counter has exceeded a second predetermine counter value of the number of times the activation circuit activates the motor (48).

## Patentansprüche

1. Produktspender (10), umfassend:
ein Dispensergehäuse (14),
eine leicht austauschbares Produktreservoir (26) zur Aufnahme eines zugehörigen Produkts,
eine Batterie (233), die im leicht austauschbaren Produktreservoir (26) integriert ist,
eine Pumpe (40) mit einem Einlass (41), der mit dem leicht austauschbaren Produktreservoir (26) fließverbunden ist, wobei die Pumpe (40) einen Auslass (42) zur Abgabe des zugehörigen Produkts aufweist,
einen elektrisch angetriebenen Niederspannungsmotor (48), der zur Betätigung der Pumpe (40) wirksam mit dieser verbunden ist,
eine Zwischen-Energiespeichervorrichtung (220), die zum Bereitstellen von Betriebsstrom wirksam mit dem Motor (48) verbunden ist, wobei die Zwischen-Energiespeichervorrichtung (220) so beschaffen ist, dass sie einen vorgegebenen Energiepegel (e₁) speichert, der ausreicht, den Motor (48) durch mehrere Betätigungszyklen zu aktivieren, und
eine Steuerung (170), die zum selektiven Aktivieren wirksam mit dem Motor (48) verbunden ist, wobei die Steuerung (170) wirksam mit der Batterie (233) und der Zwischen-Energiespeichervorrichtung (220) verbunden ist, wobei die Steuerung (170) in Erwiderung auf die Aktivierung des Motors (48) das Entladen von Energie aus der Batterie (233) zum Nachladen der Zwischen-Energiespeichervorrichtung (220) auf den vorgegebenen Energiepegel (ei) auslöst,
wobei die Steuerung (170) so funktioniert, dass sie selektiv das Entladen von Energie aus der Batterie (233) bei einer aus einer Vielzahl von im Wesentlichen unterschiedlichen Entladungsgeschwindigkeiten auslöst, und
wobei die Steuerung (170), wenn der Motor (48) aktiviert wird, die Entladungsgeschwindigkeit der Entladung von Energie aus der Batterie (233) ändert, wenn die Zwischen-Energiespeichervorrichtung (220) nicht wesentlich auf den vorgegebenen Energiepegel nachgeladen worden ist.

2. Produktspender nach Anspruch 1, wobei die Zwischen-Energiespeichervorrichtung (220) ein Superkondensator (225) ist.

3. Produktspender nach Anspruch 1, wobei die Batterie (233) eine Knopfzellenbatterie (234) ist.

4. Produktspender nach Anspruch 1, wobei die Steuerung (170) in Erwiderung auf die Aktivierung des Motors (48) das Entladen von Energie aus der Batterie (233) bei einer ersten Entladungsgeschwindigkeit auslöst, um die Zwischen-Energiespeichervorrichtung (220) innerhalb eines ersten Zeitintervalls nachzuladen, und
wobei die die Steuerung (170) in Erwiderung auf die nochmalige Aktivierung des Motors (48) innerhalb des ersten Zeitintervalls die erste Entladungsgeschwindigkeit auf eine größere, zweite Entladungsgeschwindigkeit erhöht.

5. Produktspender nach Anspruch 1, ferner umfassend:
eine Energiequelle (200), die wirksam am Spendergehäuse (14) befestigt ist, das wirksam mit der Zwischen-Energiespeichervorrichtung (220) verbunden ist,
wobei die Steuerung (170) so funktioniert, dass sie selektiv das Entladen von Energie aus der im leicht austauschbaren Produktreservoir (26) integrierten Batterie (233) und/oder der wirksam am Spendergehäuse (14) befestigten Energiequelle (200) zum Nachladen der Zwischen-Energiespeichervorrichtung (220) auslöst.

6. Produktspender nach Anspruch 5, wobei die Steuerung (170), wenn der Energiepegel in der Zwischen-Energiespeichervorrichtung (220) unter einen unteren Energiepegel-Schwellenwert (eₙ) fällt, das Entladen von Energie aus der wirksam am Spendergehäuse (14) befestigten Energiequelle (200) zum Nachladen der Zwischen-Energiespeichervorrichtung (220) auslöst.

7. Produktspender nach Anspruch 6, wobei die Steuerung (170), wenn der Energiepegel in der Zwischen-Energiespeichervorrichtung (220) unter den unteren Energiepegel-Schwellenwert (eₙ) fällt, den Fluss von Energie aus der im leicht austauschbaren Produktreservoir (26) integrierten Batterie (233) deaktiviert.

8. Produktspender nach Anspruch 6, wobei die Steuerung (170), wenn der Energiepegel in der Zwischen-Energiespeichervorrichtung (220) unter den unteren Energiepegel-Schwellenwert (eₙ) fällt, den Fluss von Energie aus der im leicht austauschbaren Produktreservoir (26) integrierten Batterie (233) und aus der wirksam am Spendergehäuse (14) befestigten Energiequelle (200) zum Nachladen der Zwischen-Energiespeichervorrichtung (220) auslöst.

9. Verfahren zum Betreiben eines Produktspenders (10), umfassend die folgenden Schritte:
Bereitstellen eines Produktspenders (10) mit einem Dispensergehäuse (14), einem Produktreservoir (26) zur Aufnahme eines zugehörigen Produkts, einer Pumpe (40) mit einem Einlass (41), der mit dem leicht austauschbaren Produktreservoir (26) fließverbunden ist, wobei die Pumpe (40) einen Auslass (42) zur Abgabe des zugehörigen Produkts aufweist, einem Motor (48), der zur Betätigung der Pumpe (40) wirksam mit dieser verbunden ist, einer Zwischen-Energiespeichervorrichtung (220), die zum Bereitstellen von Betriebsstrom wirksam mit dem Motor (48) verbunden ist, einer Batterie (233) mit niedriger Leistungsdichte zum Nachladen der Zwischen-Energiespeichervorrichtung (220), einer Steuerung (170) mit einer Ladungsschaltung (177), die wirksam mit der Batterie (233) mit niedriger Leistungsdichte und der Zwischen-Energiespeichervorrichtung (220) verbunden ist, zum Nachladen der Zwischen-Energiespeichervorrichtung (220), wobei die Steuerung (170) eine Aktivierungsschaltung enthält, die wirksam mit dem Motor (48) zu dessen Aktivierung verbunden ist, wobei der Motor (48) in einem endlichen Aktivierungszyklus betrieben wird,
Aktivieren des Motors (48), um eine vorgegebene Menge des zugehörigen Produkts abzugeben,
Entladen von Energie aus der Batterie (233) mit niedriger Leistungsdichte bei einer Entladungsgeschwindigkeit, zum Nachladen der Zwischen-Energiespeichervorrichtung (220) innerhalb eines ersten Zeitintervalls,
Reaktivieren des Motors (48) innerhalb des ersten Zeitintervalls und
Erhöhen der Entladungsgeschwindigkeit von Energie, die aus der Batterie (233) entladen wird, zum Nachladen der Zwischen-Energiespeichervorrichtung (220) in Erwiderung auf das Reaktivieren des Motors (48) innerhalb des ersten Zeitintervalls.

10. Verfahren nach Anspruch 9, wobei die Batterie (233) mit niedriger Leistungsdichte eine im Produktreservoir (26) integrierte Knopfzellenbatterie (234) ist und
wobei das Produktreservoir (26) ein leicht austauschbares, wegwerfbares Produktreservoir (26) ist.

11. Verfahren nach Anspruch 9, wobei die Steuerung eine Überwachungsschaltung enthält, die wirksam mit der Zwischen-Energiespeichervorrichtung verbunden ist, zum Überwachen des in der Zwischen-Energiespeichervorrichtung gespeicherten Energieniveaus, und ferner umfassend die folgenden Schritte:
Überwachen des in der Zwischen-Energiespeichervorrichtung gespeicherten Energieniveaus,
Definieren eines kritisch niedrigen Energiepegel-Schwellenwerts (eₙ) von in der Zwischen-Energiespeichervorrichtung (220) gespeicherter Energie und
Bereitstellen eines Produktspenders (10) mit einer alternativen Energiequelle (200), die wirksam am Spendergehäuse (14) befestigt ist,
wobei die Steuerung (170) die Zwischen-Energiespeichervorrichtung (220) in Erwiderung auf ein unter den kritisch niedrigen Energiepegel-Schwellenwert (eₙ) gefallenes Energieniveau in der Zwischen-Energiespeichervorrichtung (220) selektiv aus der Batterie (233) mit niedriger Leistungsdichte und/oder der alternativen Energiequelle (200) nachlädt.

12. Verfahren nach Anspruch 9, ferner umfassend den folgenden Schritt:
zunehmendes Erhöhen der Geschwindigkeit der Entladung von Energie aus der Batterie (233) mit niedriger Leistungsdichte in Erwiderung auf wiederholtes Reaktivieren des Motors (48) innerhalb des ersten Zeitintervalls.

13. Verfahren zum Betreiben eines Produktspenders nach Anspruch 9, wobei das Produktreservoir (26) ein leicht austauschbares Produktreservoir (26) ist, der Motor (48) ein Niederspannungsmotor (48) ist, die Zwischen-Energiespeichervorrichtung (220) so beschaffen ist, dass eine ausreichende Menge von Energie gespeichert wird, um den Motor (48) mehrmals zu aktivieren, die Batterie (233) mit niedriger Leistungsdichte im leicht austauschbaren Produktreservoir (26) integriert ist und die Steuerung (170) eine Zählerschaltung enthält, die so beschaffen ist, dass sie zählt, wie oft die Aktivierungsschaltung den Motor (48) aktiviert, wobei das Verfahren ferner den folgenden Schritt umfasst:
Hochzählen der Zählerschaltung in Erwiderung auf die Aktivierung des Motors (48),
wobei die Zwischen-Energiespeichervorrichtung (220) in Erwiderung auf Aktivierung des Motors (48) mit einer ersten Nachladegeschwindigkeit nachgeladen wird, wenn die Zählung in der Zählerschaltung unter einem vorgegebenen Zählwert liegt, und
die Zwischen-Energiespeichervorrichtung (220) in Erwiderung auf Aktivierung des Motors (48) mit einer im Wesentlichen unterschiedlichen zweiten Nachladegeschwindigkeit nachgeladen wird, wenn die Zählung in der Zählerschaltung den vorgegebenen Zählwert überschritten hat.

14. Verfahren nach Anspruch 13, wobei der Schritt des Nachladens der Zwischen-Energiespeichervorrichtung (220) mit einer im Wesentlichen unterschiedlichen zweiten Nachladegeschwindigkeit in Erwiderung auf Aktivierung des Motors (48), wenn die Zählung in der Zählerschaltung den vorgegebenen Zählwert überschritten hat, den folgenden Schritt umfasst:
Nachladen der Zwischen-Energiespeichervorrichtung (220) mit einer größeren, zweiten Nachladegeschwindigkeit in Erwiderung auf Aktivierung des Motors (48), wenn die Zählung in der Zählerschaltung den vorgegebenen Zählwert überschritten hat.

15. Verfahren nach Anspruch 13, ferner umfassend den folgenden Schritt:
Einschalten der Steuerung (170), um die Batterie (233) mit niedriger Leistungsdichte von Energie zu leeren, wenn die Zählung in der Zählerschaltung einen zweiten vorgegebenen Zählwert der Anzahl überschritten hat, wie oft die Aktivierungsschaltung den Motor (48) aktiviert.

## Revendications

1. Distributeur de produit (10), comprenant :
un boîtier de distributeur (14) ;
un réservoir de produit (26) facilement remplaçable, ledit réservoir servant à stocker un produit associé ;
une pile (233) intégrée dans le réservoir de produit (26) facilement remplaçable ;
une pompe (40) comportant une entrée (41) reliée fluidiquement au réservoir de produit (26) facilement remplaçable, la pompe (40) comportant une sortie (42) pour distribuer le produit associé ;
un moteur à basse tension (48) commandé électriquement et couplé fonctionnellement pour actionner la pompe (40) ;
un dispositif de stockage d'énergie intermédiaire (220) communiquant fonctionnellement, pour fournir une puissance de commande au moteur (48), où le dispositif de stockage d'énergie intermédiaire (220) est configuré pour stocker un niveau prédéterminé d'énergie (e₁), niveau qui est suffisant pour activer le moteur (48) passant par de multiples cycles d'activation ; et
un contrôleur (170) communiquant fonctionnellement pour activer le moteur (48) de façon sélective, où le contrôleur (170) est en liaison, fonctionnellement, avec la pile (233) et avec le dispositif de stockage d'énergie intermédiaire (220), où le contrôleur (170) commence à décharger de l'énergie provenant de la pile (233), en réponse au moteur (48) activé pour recharger le dispositif de stockage d'énergie intermédiaire (220), jusqu'au niveau prédéterminé d'énergie (e₁),
distributeur dans lequel le contrôleur (170) peut fonctionner pour commencer, de façon sélective, à décharger de l'énergie provenant de la pile (233), ladite décharge se produisant suivant l'une des intensités du courant de décharge parmi une pluralité d'intensités sensiblement différentes, et
distributeur dans lequel, quand le moteur (48) est activé, le contrôleur (170) modifie l'intensité du courant de décharge, en déchargeant de l'énergie provenant de la pile (233), si le dispositif de stockage d'énergie intermédiaire (220) n'a pratiquement pas été rechargé jusqu'au niveau prédéterminé d'énergie.

2. Distributeur de produit selon la revendication 1, dans lequel le dispositif de stockage d'énergie intermédiaire (220) est un supercondensateur (225).

3. Distributeur de produit selon la revendication 1, dans lequel la pile (233) est une pile bouton (234).

4. Distributeur de produit selon la revendication 1, dans lequel, en réponse à l'activation du moteur (48), le contrôleur (170) commence à décharger de l'énergie provenant de la pile (233), ladite décharge se produisant suivant une première intensité du courant de décharge, pour recharger le dispositif de stockage d'énergie intermédiaire (220) dans les limites d'un premier intervalle de temps ; et
où, en réponse à l'activation du moteur (48) à nouveau dans les limites du premier intervalle de temps, le contrôleur (170) augmente la première intensité du courant de décharge passant à une deuxième intensité du courant de décharge plus élevée.

5. Distributeur de produit selon la revendication 1, comprenant en outre :
une source d'énergie (200) montée fonctionnellement sur le boîtier de distributeur (14) qui est en liaison, fonctionnellement, avec le dispositif de stockage d'énergie intermédiaire (220) ; et
distributeur dans lequel le contrôleur (170) peut fonctionner pour commencer, de façon sélective, à décharger de l'énergie provenant de l'une ou des deux piles (233) intégrée (s) dans le réservoir de produit (26) facilement remplaçable, et la source d'énergie (200) est montée fonctionnellement sur le boîtier de distributeur (14) pour recharger le dispositif de stockage d'énergie intermédiaire (220).

6. Distributeur de produit selon la revendication 5, dans lequel le niveau d'énergie dans le dispositif de stockage d'énergie intermédiaire (220) passe au-dessous d'un niveau d'énergie de seuil plus bas (eₙ), le contrôleur (170) commence à décharger de l'énergie provenant de la source d'énergie (200) montée fonctionnellement sur le boîtier de distributeur (14), pour recharger le dispositif de stockage d'énergie intermédiaire (220).

7. Distributeur de produit selon la revendication 6, dans lequel, quand le niveau d'énergie dans le dispositif de stockage d'énergie intermédiaire (220) passe au-dessous du niveau d'énergie de seuil plus bas (eₙ), le contrôleur (170) désactive le flux d'énergie provenant de la pile (233) intégrée dans le réservoir de produit (26) facilement remplaçable.

8. Distributeur de produit selon la revendication 6, dans lequel, quand le niveau d'énergie dans le dispositif de stockage d'énergie intermédiaire (220) passe au-dessous du niveau d'énergie de seuil plus bas (eₙ), le contrôleur (170) amorce le flux d'énergie provenant de la pile (233) intégrée dans le réservoir de produit (26) facilement remplaçable, et, à partir de la source d'énergie (200) fonctionnellement montée sur le boîtier de distributeur (14), ledit contrôleur commence à recharger le dispositif de stockage d'énergie intermédiaire (220).

9. Procédé de fonctionnement d'un distributeur de produit (10), comprenant les étapes consistant :
à fournir un distributeur de produit (10) ayant un boîtier de distributeur (14), ayant un réservoir de produit (26) pour stocker un produit associé, ayant une pompe (40) comportant une entrée (41) reliée fluidiquement au réservoir de produit (26), la pompe (40) comportant une sortie (42) pour distribuer le produit associé, ledit distributeur ayant un moteur (48) couplé fonctionnellement pour actionner la pompe (40), ayant un dispositif de stockage d'énergie intermédiaire (200) communiquant fonctionnellement pour fournir au moteur (48) une puissance de commande, ayant une pile (233) à faible densité de puissance pour recharger le dispositif de stockage d'énergie intermédiaire (220), ayant un contrôleur (170) comportant un circuit de charge (177) fonctionnellement relié à la pile (233) à faible densité de puissance et relié au dispositif de stockage d'énergie intermédiaire (220) pour recharger le dispositif de stockage d'énergie intermédiaire (220), où le contrôleur (170) comprend un circuit d'activation relié fonctionnellement pour activer le moteur (48), où le moteur (48) est actionné dans un cycle d'activation fini ;
à activer le moteur (48) pour distribuer une quantité prédéterminée du produit associé ;
à décharger de l'énergie provenant de la pile (233) à faible densité de puissance, ladite décharge se produisant suivant une intensité du courant de décharge permettant de recharger le dispositif de stockage d'énergie intermédiaire (220) dans les limites d'un premier intervalle de temps ;
à réactiver le moteur (48) dans les limites du premier intervalle de temps ; et
à augmenter l'intensité du courant de décharge de l'énergie déchargée depuis la pile (233), pour recharger le dispositif de stockage d'énergie intermédiaire (220), en réponse à une réactivation du moteur (48) dans les limites du premier intervalle de temps.

10. Procédé selon la revendication 9, dans lequel la pile (233) à faible densité de puissance est une pile bouton (234) intégrée dans le réservoir de produit (26), et
où le réservoir de produit (26) est un réservoir de produit (26) jetable et facilement remplaçable.

11. Procédé selon la revendication 9, dans lequel le contrôleur comprend un circuit de surveillance communiquant fonctionnellement avec le dispositif de stockage d'énergie intermédiaire, pour surveiller le niveau d'énergie stockée dans le dispositif de stockage d'énergie intermédiaire ; ledit procédé comprenant en outre les étapes consistant :
à surveiller le niveau d'énergie stockée dans le dispositif de stockage d'énergie intermédiaire,
à définir un niveau d'énergie de seuil critiquement bas (eₙ) de l'énergie stockée dans le dispositif de stockage d'énergie intermédiaire (220) ; et
à fournir un distributeur de produit (10) ayant une source d'énergie de remplacement (200) montée fonctionnellement sur le boîtier de distributeur (14), et
procédé au cours duquel le contrôleur (170) recharge, de façon sélective, le dispositif de stockage d'énergie intermédiaire (220), à partir de l'une ou des deux piles (233) à faible densité de puissance, et la source d'énergie de remplacement (200), en réponse au niveau d'énergie dans le dispositif de stockage d'énergie intermédiaire (220), passe au-dessous du niveau d'énergie de seuil critiquement bas (eₙ) .

12. Procédé selon la revendication 9, comprenant en outre l'étape consistant :
à augmenter progressivement l'intensité d'énergie déchargée depuis la pile (233) à faible densité de puissance, en réponse à la réactivation du moteur (48) se produisant de manière répétée dans les limites du premier intervalle de temps.

13. Procédé de fonctionnement d'un distributeur de produit selon la revendication 9, dans lequel le réservoir de produit (26) est un réservoir de produit (26) facilement remplaçable, le moteur (48) est un moteur (48) à basse tension, le dispositif de stockage d'énergie intermédiaire (220) est configuré pour stocker une quantité suffisante d'énergie, afin d'activer le moteur (48) de multiples fois, la pile (233) à faible densité de puissance est intégrée dans le réservoir de produit (26) facilement remplaçable, et le contrôleur (170) comprend un circuit de comptage configuré pour compter le nombre de fois où le circuit d'activation active le moteur (48) ; le procédé comprenant en outre l'étape consistant :
à incrémenter le circuit de comptage en réponse à l'activation du moteur (48) ;
procédé au cours duquel le dispositif de stockage d'énergie intermédiaire (220) est rechargé suivant une première intensité du courant de recharge, en réponse à l'activation du moteur (48), quand le décompte effectué dans le circuit de comptage est inférieur à une valeur de comptage prédéterminée ; et
le dispositif de stockage d'énergie intermédiaire (220) est rechargé suivant une deuxième intensité du courant de recharge sensiblement différente, en réponse à l'activation du moteur (48), quand le décompte effectué dans le circuit de comptage a dépassé la valeur de comptage prédéterminée.

14. Procédé selon la revendication 13, dans lequel la recharge du dispositif de stockage d'énergie intermédiaire (220) suivant une deuxième intensité du courant de recharge sensiblement différente, en réponse à l'activation du moteur (48), quand le décompte effectué dans le circuit de comptage a dépassé la valeur de comptage prédéterminée, comprend l'étape consistant :
à recharger le dispositif de stockage d'énergie intermédiaire (220) suivant une deuxième intensité du courant de recharge plus élevée, en réponse à l'activation du moteur (48), quand le décompte effectué dans le circuit de comptage a dépassé la valeur de comptage prédéterminée.

15. Procédé selon la revendication 13, comprenant en outre l'étape consistant :
à engager le contrôleur (170) à pratiquement vider la pile (233) à faible densité de puissance, de l'énergie qu'elle contient, quand le compteur a dépassé une deuxième valeur de comptage, prédéterminée, du nombre de fois où le circuit d'activation active le moteur (48).
